**Europäisches Patentamt**

**European Patent Office**

**Office européen des brevets**

(19)

(11) Veröffentlichungsnummer: **0 176 469**
**B1**

(12) ## EUROPÄISCHE PATENTSCHRIFT

(45) Veröffentlichungstag der Patentschrift:
**09.03.88**

(51) Int. Cl.⁴: **B 60 B 39/00**

(21) Anmeldenummer: **85730117.0**

(22) Anmeldetag: **06.09.85**

(54) **Gleitschutzvorrichtung.**

(30) Priorität: **10.09.84 DE 3433620**

(43) Veröffentlichungstag der Anmeldung:
**02.04.86 Patentblatt 86/14**

(45) Bekanntmachung des Hinweises auf die Patenterteilung:
**09.03.88 Patentblatt 88/10**

(84) Benannte Vertragsstaaten:
**AT CH FR GB IT LI SE**

(56) Entgegenhaltungen:
**DE - C - 266 487**
**US - A - 2 283 948**

(73) Patentinhaber: **RUD-Kettenfabrik Rieger & Dietz GmbH u. Co., Friedensinsel, D-7080 Aalen 1 (DE)**

(72) Erfinder: **Rieger, Hansjörg, Dr.-Ing., Saarstrasse 48, D-7080 Aalen (DE)**
Erfinder: **Hofmann, Peter, Heulenbergweg 76, D-7080 Aalen-Unterkochen (DE)**

(74) Vertreter: **Böning, Manfred, Dr. Ing. et al, Patentanwälte Dipl.-Ing. Dieter Jander Dr. Ing. Manfred Böning Kurfürstendamm 66, D-1000 Berlin 15 (DE)**

**Beschreibung**

Die Erfindung betrifft eine Gleitschutzvorrichtung für Kraftfahrzeuge mit einer Vielzahl von an einem aus einer Ruhestellung in eine Arbeitsstellung überführbaren und durch einen Antrieb in eine Umlaufbewegung versetzbaren Halter befestigten Kettensträngen, deren Enden bei hinreichend schnell umlaufendem Halter unter Fliehkrafteinwirkung vom Halter weggeschleudert werden und von denen zumindest Teile bei sich drehendem Fahrzeugrad den Bereich der Radaufstandsfläche passieren.

Aus der US-A-2 283 948 ist eine Gleitschutzvorrichtung der vorstehenden Art bekannt, bei der der Halter drehfest mit einem Reibrad verbunden ist, das in der Arbeitsstellung der Gleitschutzvorrichtung gegen die Flanke des Fahrzeugreifens gedrückt wird. Bei dieser Konstruktion hängt die Drehzahl des Halters einzig und allein von der Drehzahl des Fahrzeugreifens ab. Dies bedeutet, dass beim Anfahren und beim Abbremsen bzw. beim Fahren mit niedrigen Geschwindigkeiten des Fahrzeuges wegen des Fehlens hinreichend grosser Fliehkräfte nicht die Gewähr dafür gegeben ist, dass die Kettenstränge in eine Position gelangen, in der sie den erwünschten Gleitschutzeffekt bewirken. Kommt es infolge des fehlenden Gleitschutzeffektes zu einem Durchdrehen des Fahrzeugrades, so sinkt der Reibungsbeiwert zwischen Reifen und Aufstandfläche in einzelnen Fällen praktisch bis auf Null, da der Reifen den Untergrund gewissermassen poliert. Die Folge ist, dass der Anteil, den der Reifen normalerweise selbst zum Vortrieb beiträgt, zunichte gemacht wird. Dieser Anteil aber ist vielfach unverzichtbar, so dass das Fahrzeug bei durchdrehendem Rad selbst dann nicht in der Lage ist, anzufahren, wenn die vom Fahrzeugrad über den Reibradantrieb auf die Kettenstränge ausgeübten Fliehkräfte ausreichend gross sind, um die Kettenstränge nach aussen zu schleudern, d.h. in die an sich gewünschte Lage zu überführen. Zusätzlich treten ruckartige Kräfte auf, die ein weiches Anfahren unmöglich machen.

Aber auch beim Fahren mit niedrigen Geschwindigkeiten ergeben sich Probleme, und zwar insbesondere dann, wenn man Kettenstränge verwenden möchte, die zur Erzielung einer guten Gleitschutzwirkung vergleichsweise lang sind. Einerseits nehmen nämlich die für das Nachaussenschleudern der Kettenstränge erforderlichen Fliehkräfte mit zunehmender Kettenstranglänge ebenfalls zu, andererseits neigen längere Kettenstränge bei verhältnismässig geringen auf sie einwirkenden Fliehkräften zu einer Art Zopfbildung. Es hat nicht an Versuchen gefehlt, das vorstehend angedeutete Problem dadurch zu eliminieren, dass man anstelle von Kettensträngen in Radialrichtung starre Gleitschutzelemente verwendete, zu deren Überführung in die Arbeitslage es keiner Fliehkräfte bedarf. Auch diese Lösungen haben sich indessen nicht bewährt, da bei ihnen ein Ausgleich von Differenzgeschwindigkeiten zwischen Fahrzeugrad und Gleitschutzelementen im Aufstandsbereich des Reifens nicht möglich ist, und zwar selbst dann nicht, wenn die Gleitschutzelemente, in Radialrichtung betrachtet, federnde Ausgleichsbewegungen machen können.

Noch kritischer sind die Verhältnisse beim Abbremsen des Fahrzeuges. Wird die Gleitschutzvorrichtung erst eingeschaltet, wenn die Fahrzeugräder auf glatter Fahrbahn infolge der Bremsung bereits blockiert sind, entfällt überhaupt jede Gleitschutzwirkung. In Fällen, in denen dagegen mit eingeschalteter Gleitschutzvorrichtung gebremst wird, verliert diese gleichwohl ihre Wirksamkeit, sobald eine bestimmte Geschwindigkeit unterschritten wird, die in der Praxis bei 5 bis 7 km/h liegt. Neue Kettenstränge können nämlich wegen zu geringer auf sie einwirkender Fliehkräfte nicht mehr unter den Reifen geschleudert werden und unter dem Reifen befindliche Kettenstränge werden aus dem Bereich der Reifenaufstandsfläche herausgeschoben.

Der Erfindung liegt die Aufgabe zugrunde, eine Gleitschutzvorrichtung der in Betracht gezogenen Art derart weiterzuentwickeln, dass sie auch beim Anfahren und Abbremsen des Fahrzeuges wirksam ist.

Diese Aufgabe wird erfindungsgemäss gelöst durch einen von der Drehbewegung des Fahrzeugrades unabhängigen Antrieb für den Halter, der auch bei stillstehendem bzw. sich langsam drehenden Fahrzeugrad die Einleitung einer Umlaufbewegung in den Halter ermöglicht, die die Überführung der Kettenstränge in eine Gleitschutzposition gestattet.

Die erfindungsgemässe Gleitschutzvorrichtung bietet den Vorteil, dass durch ihren Einsatz gegenüber dem Einsatz bekannter einschlägiger Gleitschutzvorrichtungen die Verkehrssicherheit von mit ihr ausgerüsteten Fahrzeugen beim Winterbetrieb deutlich erhöht wird. Durch den zumindest in Teilfahrbereichen von der Drehung des Fahrzeugrades unabhängigen Antrieb und die Wahl einer hinreichend grossen Mindestdrehzahl, können längere Kettenstränge als bisher verwendet werden, die den Reifen auf einer grösseren Breite überdecken und so die Gleitschutzwirkung erhöhen.

Die abhängigen Patentansprüche beziehen sich auf besondere Ausführungsarten der Erfindung.

Weitere Einzelheiten der Erfindung ergeben sich aus der nachstehenden Beschreibung mehrerer in der beigefügten Zeichnung dargestellter Ausführungsbeispiele.

Es zeigen:

Fig. 1 schematisiert die Anordnung zweier Gleitschutzvorrichtungen an einem Nutzfahrzeug;

Fig. 2 eine Einzelheit der Gleitschutzvorrichtung gemäss Fig. 1;

Fig. 3 eine Einzelheit einer modifizierten Gleitschutzvorrichtung der in Fig. 1 dargestellten Art;

Fig. 4 eine Einzelheit einer Gleitschutzvorrichtung mit einem zwei Systeme umfassenden Antrieb und

Fig. 5 in vergrössertem Massstab Einzelheiten eines besonders vorteilhaften Antriebes.

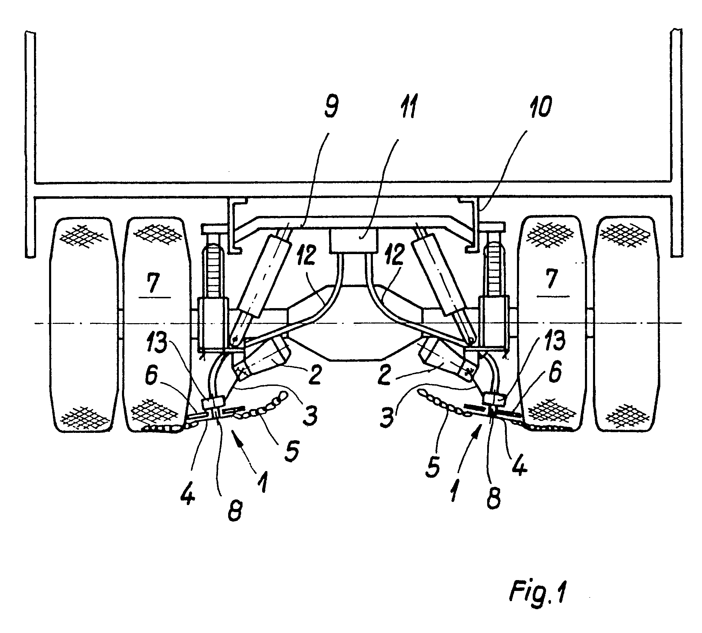

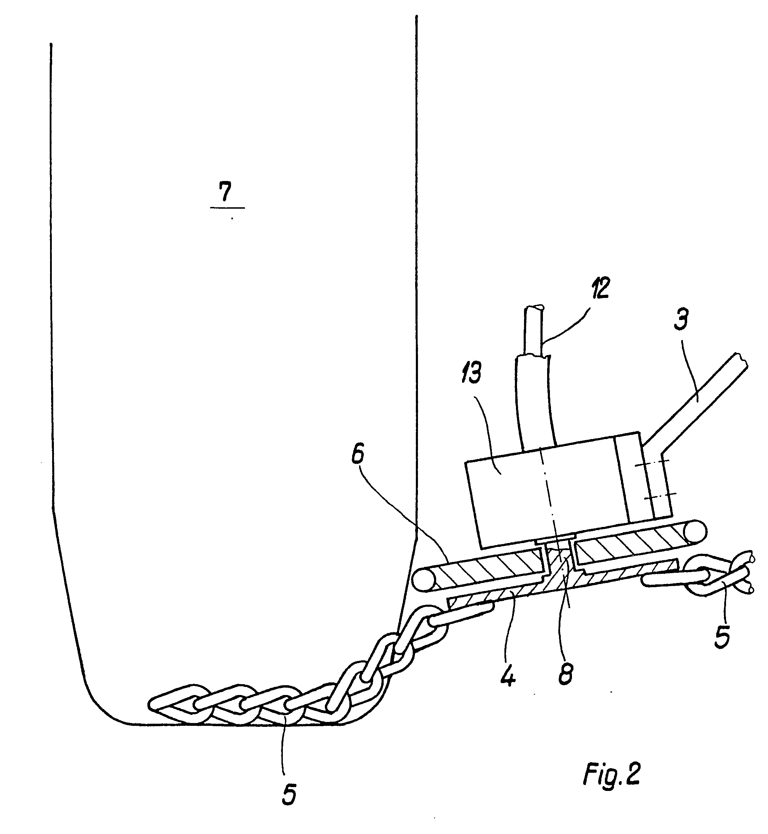

In Fig. 1 sind mit 1 allgemein zwei im Bereich einer Hinterachse eines Lastkraftwagens angeordnete Gleitschutzvorrichtungen bezeichnet. Jede dieser Gleitschutzvorrichtungen 1 wird von einem durch einen Zylinder-Kolben-Trieb 2 betätigbaren Träger 3 gehalten, durch den die Gleitschutzvorrichtungen aus einer Ruhelage in die dargestellte Arbeitslage überführbar sind. Zu jeder Gleitschutzvorrichtung gehört ein Halter 4 für eine Vielzahl von Kettensträngen 5 und eine Stützrolle 6, die gegen die Flanke eines Fahrzeugrades 7 anliegt. Wie insbesondere aus Fig. 2 hervorgeht, ist die Stützrolle 6 frei beweglich auf einer Welle 8 des Halters 4 gelagert. Zum Antrieb der Halter 4, die im dargestellten Fall wie die Stützrolle 6 rotationssymmetrisch ausgebildet sind, dient ein an einer Quertraverse 9 des Fahrzeuggestells 10 befestigter Motor 11, der über biegsame Wellen 12 und Rutschkupplungen 13 mit den Haltern 4 verbunden ist. Der Motor 11 ist vorzugsweise als Getriebemotor ausgebildet und kann elektrisch, pneumatisch oder hydraulisch betrieben werden. Denkbar ist auch eine Lösung, bei der die biegsamen Wellen 12 unter Zwischenschaltung eines Getriebes vom Fahrzeugmotor selbst angetrieben werden. Die Einschaltung von Rutschkupplungen 13 in den Kraftfluss bietet den Vorteil, dass vom jeweiligen Fahrzeugrad 7 über die Kettenstränge 5 in die Halter 4 eingeleitete ruckartige Bewegungen nicht ungedämpft auf die biegsamen Wellen 12 übertragen werden.

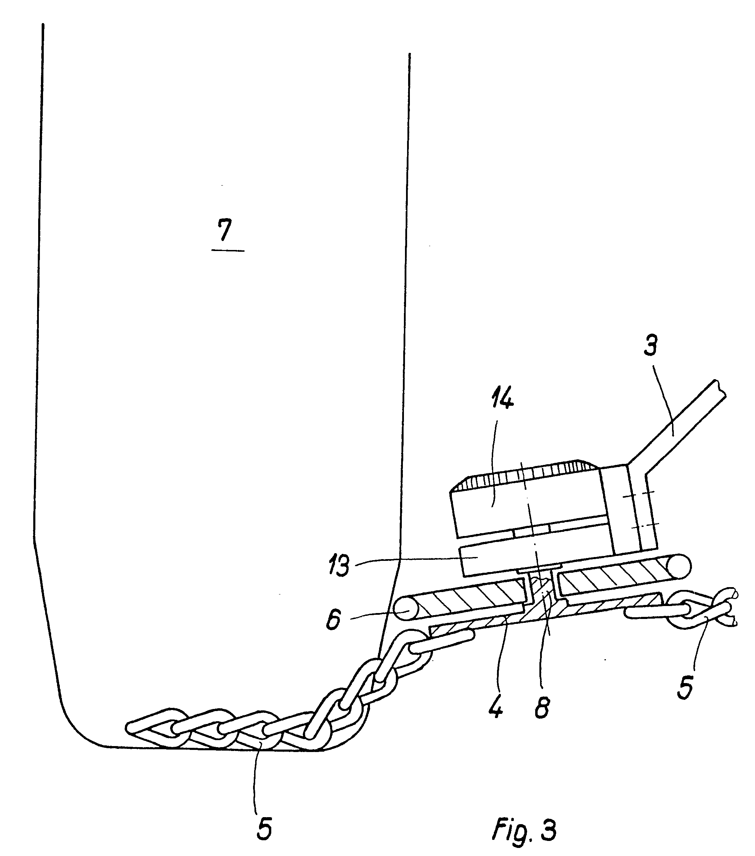

Während bei dem Ausführungsbeispiel gemäss Fig. 1 und 2 der Antrieb der Halter 4 über einen zentralen Motor 11 erfolgt, ist bei dem Ausführungsbeispiel gemäss Fig. 3 jedem Halter 4 ein gesonderter Motor 14 zugeordnet, der wie der Halter 4 und die ihm vorgeschaltete Rutschkupplung 13 am Träger 3 gelagert ist.

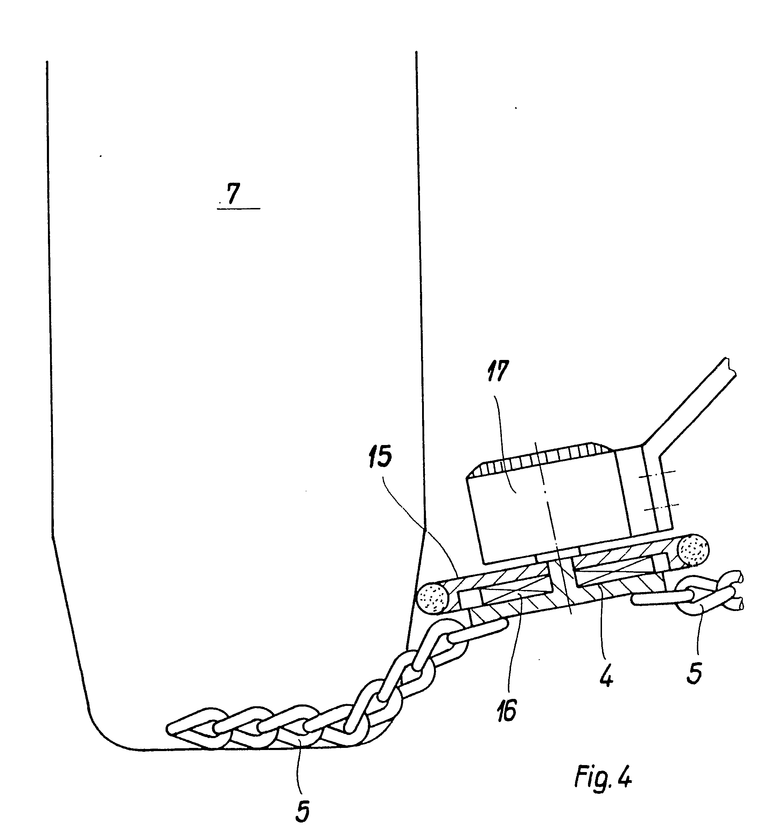

Fig. 4 zeigt eine Einzelheit einer Gleitschutzvorrichtung, bei der eine als Reibrad ausgebildete Stützrolle 15 Verwendung findet, die über eine Fliehkraftkupplung 16 mit dem von einem Motor 17 angetriebenen Halter 4 in Verbindung steht. Die Fliehkraftkupplung 16 ist so ausgelegt, dass eine Verbindung von Stützrolle 15 und Halter 4 erst dann zustande kommt, wenn die Stützrolle 15 vom Fahrzeugrad 7 mit einer Drehzahl angetrieben wird, die grösser ist als die Drehzahl des Motors 17. Sobald dieser Fall eingetreten ist, kann die Energiezufuhr zum Motor 17 durch geeignete Steuermittel unterbrochen werden, um erst beim Absinken der Drehzahl unter den Abschaltwert und Lösen der Fliehkraftkupplung 16 wieder eingeschaltet zu werden.

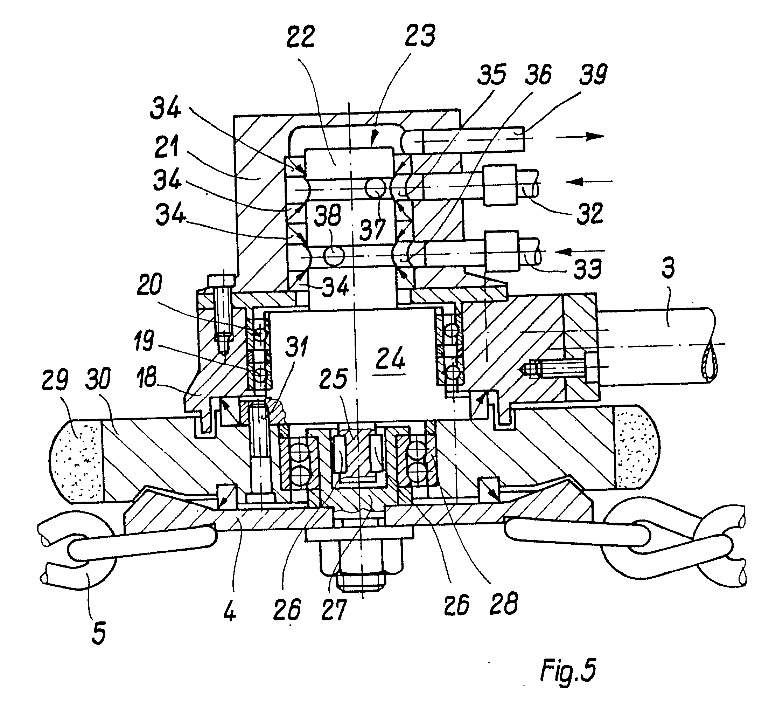

Ein besonders vorteilhafter Antrieb für eine Gleitschutzvorrichtung ist in Fig. 5 dargestellt. An einem Träger 3 ist hier eine Tragbuchse 18 für zwei Wälzlager 19, 20 und einen Deckel 21 befestigt. In der Tragbuchse 18 und im Deckel 21 ist drehbar das Gehäuse 22 eines als pneumatisch angetriebener Getriebemotor ausgebildeten Motors 23 gelagert, dessen nicht gezeigter Rotor ein Getriebe 24 antreibt, dessen Antriebswelle 25 über Passfedern 26 drehfest mit der Welle 27 eines Halters 4 in Verbindung steht. Die Welle 27 ist dabei mittels eines Wälzlagers 28 in der als Reibrad mit einem elastischen Beleg 29 ausgebildeten Stützrolle 30 gelagert, welche ihrerseits drehfest durch Schraubenbolzen 31 mit dem Gehäuse 22 des Motors 23 bzw. des Getriebes 24 verbunden ist. 32 ist eine Zuleitung für die den Vorwärtslauf des Motors 23 bewirkende Druckluft, während die Druckluft für den Rückwärtslauf des Motors 23 diesem über eine Zuleitung 33 zugeführt wird. Die Beaufschlagung der jeweiligen Zuleitung 32 oder 33 wird durch ein nicht dargestelltes Ventil gesteuert, zu dessen Betätigung beispielsweise der Schalthebel des Fahrzeuggetriebes oder die Stromversorgung für die Rückfahrleuchten des Fahrzeuges genutzt werden kann. 34 sind Dichtungen, die Ringnuten 35 und 36 begrenzen, über die die Druckluft zu jeweils einer der Einlassöffnungen 37, 38 im Gehäuse 22 des Motors 23 gelangt, um dessen Rotor in die eine oder andere Richtung in Drehung zu versetzen. Die axial nach oben aus dem Gehäuse 22 des Motors 23 austretende Druckluft gelangt schliesslich über eine Austrittsleitung 39 ins Freie. Bei stehendem Fahrzeugrad, d.h. bei nicht bewegter Stützrolle 30, treibt einzig und allein die Abtriebswelle 25 des Getriebes 24 den Halter 4 an, wobei dessen Drehzahl hinreichend gross ist, um ein Nachaussenschleudern der Kettenstränge 5 und folglich den erwünschten Gleitschutz sicherzustellen. Sobald sich das Fahrzeugrad zu drehen beginnt, wird der Drehung des Rotors des Motors 23 über die Stützrolle 30 eine zusätzliche Drehbewegung überlagert. Es ist folglich nicht nötig, mit zunehmender Fahrzeuggeschwindigkeit die Drehzahl des Rotors des Motors 23 unter Erhöhung des Druckluftverbrauches zu steigern, es besteht vielmehr die Möglichkeit, die Druckluftzufuhr in Abhängigkeit von der Drehzahl des Fahrzeugrades 7 zu drosseln oder auch völlig zu unterbrechen.

Im Hinblick auf die Kompressibilität des Antriebsmediums Druckluft ist der Motor 23 unempfindlich gegen von den Kettensträngen 5 in den Halter 4 übertragene Drehmomentschwankungen. Auf die Zwischenschaltung einer Rutschkupplung oder eine die Drehmomentsänderungen ausgleichende elektronische Steuerung kann mithin verzichtet werden.

## Patentansprüche

1. Gleitschutzvorrichtung für Kraftfahrzeuge mit einer Vielzahl von an einem aus einer Ruhestellung in eine Arbeitsstellung überführbaren und durch einen Antrieb in eine Umlaufbewegung versetzbaren Halter (4) befestigten Kettensträngen (5), deren Enden bei hinreichend schnell umlaufendem Halter (4) unter Fliehkrafteinwirkung vom Halter (4) weggeschleudert werden und von denen zumindest Teile bei sich drehendem Fahrzeugrad (7) den Bereich der Radaufstandsfläche passieren, gekennzeichnet durch einen von der Drehbewegung des Fahrzeugrades (7) unabhängigen Antrieb (11-13; 13, 14; 15-17; 23) für den Halter (4), der auch bei stillstehendem bzw. sich langsam drehenden Fahrzeugrad (7) die Einleitung einer Umlaufbewegung in den Halter (4) ermöglicht, die die Überführung der Kettenstränge (5) in eine Gleitschutzposition gestattet.

2. Gleitschutzvorrichtung nach Anspruch 1, dadurch gekennzeichnet, dass der Antrieb in Abhängigkeit von der Fahrtrichtung des Fahrzeuges reversierbar ist.

3. Gleitschutzvorrichtung nach Anspruch 1 oder 2, dadurch gekennzeichnet, dass sie mit mindestens einer Stützrolle (6; 15; 30) versehen ist, über die sie sich in ihrer Arbeitsstellung an der Flanke des Fahrzeugrades (7) abstützt.

4. Gleitschutzvorrichtung nach Anspruch 3, dadurch gekennzeichnet, dass die Stützrolle (6; 15; 30) und der Halter (4) eine gemeinsame Längsachse haben.

5. Gleitschutzvorrichtung nach Anspruch 4, dadurch gekennzeichnet, dass die Stützrolle (6; 15; 30) drehbar auf einer Welle (8, 27) für den Halter (4) gelagert ist.

6. Gleitschutzvorrichtung nach einem der Ansprüche 1 bis 5, dadurch gekennzeichnet, dass ein zusätzliches, von der Drehzahl des Fahrzeugrades (7) abhängiges Antriebssystem vorgesehen ist.

7. Gleitschutzvorrichtung nach einem der Ansprüche 3 bis 6, dadurch gekennzeichnet, dass die Stützrolle (15; 30) als Reibrad ausgebildet ist.

8. Gleitschutzvorrichtung nach Anspruch 6 und 7, dadurch gekennzeichnet, dass zum Antreiben des Halters (4) die Stützrolle (15; 30) und ein Motor (14; 23) dienen.

9. Gleitschutzvorrichtung nach Anspruch 8, dadurch gekennzeichnet, dass der Motor (23) ein drehbar in bzw. an einem Träger (3) gelagertes Gehäuse (22) aufweist, das durch die Stützrolle (30) in Drehung versetzbar ist.

10. Gleitschutzvorrichtung nach Anspruch 9, dadurch gekennzeichnet, dass sie durch den Träger (3) aus ihrer Ruhestellung in die Arbeitsstellung und zurück überführbar ist.

11. Gleitschutzvorrichtung nach einem der Ansprüche 1 bis 10, dadurch gekennzeichnet, dass der Antrieb einen Getriebemotor (23) aufweist.

12. Gleitschutzvorrichtung nach einem der Ansprüche 1 bis 11, dadurch gekennzeichnet, dass der Antrieb einen Druckluftmotor (23) aufweist.

13. Gleitschutzvorrichtung nach einem der Ansprüche 1 bis 11, dadurch gekennzeichnet, dass der Antrieb einen Hydraulikmotor aufweist.

14. Gleitschutzvorrichtung nach einem der Ansprüche 1 bis 11, dadurch gekennzeichnet, dass der Antrieb einen Elektromotor aufweist.

15. Gleitschutzvorrichtung nach einem der Ansprüche 7 bis 14, dadurch gekennzeichnet, dass der Motor (17, 23) bei Erreichen einer bestimmten Fahrzeuggeschwindigkeit abschaltbar ist und der Halter (4) danach allein durch die Stützrolle (15; 30) angetrieben wird.

16. Gleitschutzvorrichtung nach einem der Ansprüche 8 bis 15, dadurch gekennzeichnet, dass der Motor (11) über eine Rutschkupplung (13) mit dem Halter (4) verbunden ist.

17. Gleitschutzvorrichtung nach Anspruch 8 oder Anspruch 8 und einem der Ansprüche 9 bis 16, dadurch gekennzeichnet, dass der Motor (17) über eine Fliehkraftkupplung (16) mit der Stützrolle (15) verbunden ist.

18. Gleitschutzvorrichtung nach einem der Ansprüche 1 bis 17, dadurch gekennzeichnet, dass sie mit einem Kettenkasten zur Aufnahme der Kettenstränge in ihrer Ruhestellung versehen ist.

19. Gleitschutzvorrichtung nach einem der Ansprüche 1 bis 18, dadurch gekennzeichnet, dass die Kettenstränge federnd am Halter gelagert sind.

**Claims**

1. An anti-slip device for motor vehicles comprising a plurality of chain lengths (5) secured on a holder (4) which can be transferred from a rest position into a working position and be set into a rotating movement by a drive system, the ends of which chain lengths, when the holder (4) is rotating sufficiently fast, are projected away from the holder (4) under the action of centrifugal force, and at least parts of which chain lengths pass through the region of the wheel/road contact area when the vehicle wheel (7) is rotating, characterised by a drive system (11-13; 13, 14; 15-17; 23), independent of the rotating movement of the vehicle wheel (7), for the holder (4), which renders possible the introduction of a rotating movement into the holder (4), permitting the transference of the chain lengths (5) into an anti-slip position, even when the vehicle wheel (7) is stationary or rotating slowly.

2. An anti-slip device according to Claim 1, characterised in that the drive system is reversible in dependence upon the direction of travel of the vehicle.

3. An anti-slip device according to Claim 1 or 2, characterised in that it is provided with at least one support roller (6; 15; 30) by means of which it is supported in its working position on the flank of the vehicle wheel (7).

4. An anti-slip device according to Claim 3, characterised in that the support roller (6; 15; 30) and the holder (4) have a common longitudinal axis.

5. An anti-slip device according to Claim 4, characterised in that the support roller (6; 15; 30) is mounted rotatably on a shaft (8, 27) for the holder (4).

6. An anti-slip device according to any one of Claims 1 to 5, characterised in that an additional drive system dependent upon the rotation rate of the vehicle wheel (7) is provided.

7. An anti-slip device according to any one of Claims 3 to 6, characterised in that the support roller (15; 30) is formed as a friction wheel.

8. An anti-slip device according to Claims 6 and 7, characterised in that the support roller (15; 30) and a motor (14; 23) serve for the drive of the holder (4).

9. An anti-slip device according to Claim 8, characterised in that the motor (23) comprises a housing (22) which is rotatably mounted in or on a carrier (3) and which can be set in rotation by the support roller (30).

10. An anti-slip device according to Claim 9, characterised in that it is transferrable by the carrier (3) out of its rest position into the working position and back.

11. An anti-slip device according to any one of Claims 1 to 10, characterised in that the drive system comprises a geared motor (23).

12. An anti-slip device according to any one of Claims 1 to 11, characterised in that the drive system comprises a pneumatic motor (23).

13. An anti-slip device according to any one of Claims 1 to 11, characterised in that the drive system comprises a hydraulic motor.

14. An anti-slip device according to any one of Claims 1 to 11, characterised in that the drive system comprises an electric motor.

15. An anti-slip device according to any one of Claims 7 to 14, characterised in that the motor (17; 23) can be switched off when a specific vehicle speed is reached and thereafter the holder (4) is driven solely by the support roller (15; 30).

16. An anti-slip device according to any one of Claims 8 to 15, characterised in that the motor (11) is connected to the holder (4) through a slipping clutch (13).

17. An anti-slip device according to Claim 8, or Claim 8 and any one of Claims 9 to 16, characterised in that the motor (17) is connected to the support roller (15) through a centrifugal clutch (16).

18. An anti-slip device according to any one of Claims 1 to 17, characterised in that it is provided with a chain chest to receive the chain lengths in their rest position.

19. An anti-slip device according to any one of Claims 1 to 18, characterised in that the chain lengths are resiliently mounted on the holder.

**Revendications**

1. Dispositif antidérapant pour véhicules automobiles, comprenant un certain nombre de brins de chaînes (5) fixés à une monture (4) qui peut être mise en rotation par un dispositif d'entraînement et qui peut être amenée d'une position de repos à une position de travail, les extrémités de ces brins de chaînes étant projectées vers l'extérieur de la monture (4) par l'action de la force centrifuge lorsque la monture (4) tourne assez rapidement, et au moins certaines parties de ces brins passant dans la région de la surface de portée de la roue lorsque la roue du véhicule (7) tourne, caractérisé par un dispositif d'entraînement (11-13; 13, 14; 15-17; 23) de la monture (4), indépendant du mouvement de rotation de la roue (7) du véhicule, qui perment, même lorsque la roue (7) du véhicule est à l'arrêt ou tourne lentement, l'impression à la monture (4) d'un mouvement de rotation permettant d'amener les brins de chaînes (5) dans une position antidérapage.

2. Dispositif antidérapant selon la revendication 1, caractérisé en ce que l'entraînement est réversible en fonction du sens de marche du véhicule.

3. Dispositif antidérapant selon la revendication 1 ou 2, caractérisé en ce qu'il est muni d'au moins un galet d'appui (6; 15; 30) par l'intermédiaire duquel il s'appuie contre le flanc de la roue (7) du véhicule dans sa position de travail.

4. Dispositif antidérapant selon la revendication 3, caractérisé en ce que le galet d'appui (6; 15; 30) et la monture (4) ont un axe longitudinal commun.

5. Dispositif antidérapant selon la revendication 4, caractérisé en ce que le galet d'appui (6; 15; 30) est monté rotatif sur un arbre (8, 27) qui porte la monture (4).

6. Dispositif antidérapant selon l'une des revendications 1 à 5, caractérisé en ce qu'il est prévu un système d'entraînement additionnel qui est indépendant de la vitesse de rotation de la roue (7) du véhicule.

7. Dispositif antidérapant selon l'une des revendications 3 à 6, caractérisé en ce que le galet d'appui (15; 30) est constitué par une roue de friction.

8. Dispositif antidérapant selon les revendications 6 et 7, caractérisé en ce que, pour l'entraînement de la monture (4), on utilise le galet d'appui (15; 30) et un moteur (14; 23).

9. Dispositif antidérapant selon la revendication 8, caractérisé en ce que le moteur (23) comprend un corps rotatif (22), monté dans ou sur un support (3), qui peut être mis en rotation par le galet d'appui (30).

10. Dispositif antidérapant selon la revendication 9, caractérisé en ce qu'il peut être amené de sa position de repos à la position de travaial et ramené en sens inverse par le support (3).

11. Dispositif antidérapant selon l'une des revendications 1 à 10, caractérisé en ce que le dispositif d'entraînement comprend un moto-réducteur (23).

12. Dispositif antidérapant selon l'une des revendications 1 à 11, caractérisé en ce que le dispositif d'entraînement comprend un moteur à air comprimé (23).

13. Dispositif antidérapant selon l'une des revendications 1 à 11, caractérisé en ce que le dispositif d'entraînement comprend un moteur hydraulique.

14. Dispositif antidérapant selon l'une des revendications 1 à 11, caractérisé en ce que le dispositif d'entraînement comprend un moteur électrique.

15. Dispositif antidérapant selon l'une des revendications 7 à 14, caractérisé en ce que le moteur (17, 23) peut être mis hors circuit lorsqu'est atteinte une vitesse déterminée du véhicule et que la monture (4) est ensuite entraînée exclusivement par le galet d'appui (15, 30).

16. Dispositif antidérapant selon l'une des revendications 8 à 15, caractérisé en ce que le moteur (11) est relié à la monture (4) par l'intermédiaire d'un embrayage à glissement (13).

17. Dispositif antidérapant selon la revendication 8 et l'une des revendications 9 à 16, caractérisé en ce que le moteur (17) est relié au galet d'appui (15) par l'intermédiaire d'un embrayage centrifuge (16).

18. Dispositif antidérapant selon l'une des revendications 1 à 17, caractérisé en ce qu'il est muni d'une boîte à chaînes destinée à contenir les brins de chaînes dans leur position de repos.

19. Dispositif antidérapant selon l'une des revendications 1 à 18, caractérisé en ce que les brins de chaînes sont montés élastiquement sur la monture.

Fig.1

Fig.2

Fig. 3

Fig. 4

Fig.5